# EUROPEAN PATENT APPLICATION

(11) **EP 3 199 074 A1**
(43) Date of publication of application: **02.08.2017**
(21) Application number: 17157976.6
(22) Date of filing: 11.09.2012
(51) Int. Cl.: A47J 31/46, A47J 31/06

(54) **IMPROVEMENTS IN AND RELATING TO BEVERAGE PREPARATION MACHINES**

(30) Priority: 12.09.2011 GB 201115728
(62) Divisional of application: 12766132.0
(71) Applicant: Koninklijke Douwe Egberts B.V., 3532 AD Utrecht (NL)
(72) Inventor: NORTON, Mark, Banbury, Oxfordshire OX16 0ND (GB); HANSEN, Nick Andrew, Banbury, Oxfordshire OX16 1AH (GB)
(74) Representative: Boult Wade Tennant

(57) **Abstract**

The present invention provides a beverage preparation machine comprising a beverage formation chamber comprising an inlet for receiving an aqueous medium and an outlet for discharging a beverage formed by contacting the aqueous medium with one or more beverage ingredients, the beverage preparation machine further comprising an intermediate member positioned downstream of the beverage formation chamber outlet to receive the beverage, the intermediate member being located between the beverage formation chamber outlet and a receptacle that, in use, ultimately receives the beverage prepared by the beverage preparation machine;
wherein the intermediate member defines a cavity which, in use, receives the beverage from the beverage formation chamber outlet, the cavity comprising a base comprising a lowermost point and at least one region raised relative to the lowermost point; the base comprising a plurality of apertures either: including one or more apertures located at or towards the lowermost point of the base and one or more apertures located in the at least one region raised relative to the lowermost point; or including one or more apertures arranged to extend at or towards the lowermost point into the at least one region raised relative to the lowermost point.

## Description

Beverage preparation machines which produce beverages through contact of an aqueous medium with one or more beverage ingredients are known for the production of beverages such as coffee, hot chocolate and other soft drinks. Such beverage preparation machines include those of the type where the one or more beverage ingredients are packaged in a cartridge, capsule, porous envelope or similar.

With many types of beverage it is desirable that the beverage includes a foam or "crema" at the surface of the beverage.

It is known that a cartridge for a beverage preparation machine may comprise an entrainer for entraining air into a beverage stream formed from the beverage ingredients. An example is shown in EP 1 440 910 where an eductor arrangement is described. For the entrainer to work an adequate supply of air must reach the air inlet of the eductor.

It is also known that a variable geometry valve can be used downstream of a beverage formation chamber to vary the back pressure experienced by beverage ingredients during beverage formation. An example is shown in WO2010/125326. Where such a valve is incorporated into the beverage preparation machine to adjust the back pressure it is necessary to provide a fluid-tight seal for the beverage formation chamber (or where a cartridge is used, a fluid-tight seal for the cartridge) to ensure the increased back pressure is maintained.

A problem arises in ensuring that such a system (or similar system) is also capable of dispensing beverages from cartridges incorporating an entrainer which necessitates ensuring adequate air reaches the entrainer in the absence of any dedicated air route to the beverage formation chamber and/or beverage cartridge.

Against this background there is provided a beverage preparation machine for forming a beverage by contacting an aqueous medium with one or more beverage ingredients,
the beverage preparation machine comprising a tube forming at least a part of an outlet path for discharging the beverage to a receptacle;
wherein the tube has an upstream end for receiving the beverage and a downstream end for discharging the beverage;
wherein the upstream end has a characteristic internal dimension of at least 8 mm and the downstream end has a characteristic internal dimension of at least 10 mm.

Advantageously, the beverage preparation machine enables a larger layer of foam at the surface of a beverage prepared by the beverage preparation machine.

The outlet tube may be used with a beverage preparation machine that receives a cartridge containing the beverage ingredients. A wide range of cartridges, pads, capsules, etc. can be used with the outlet tube. The cartridge may be provided with an entrainer for incorporating air into the beverage.

It may be desirable for the beverage ingredients (in, for example, a beverage formation chamber or cartridge held within the beverage formation chamber) to be sealed during use such that the only fluid connections between the beverage ingredients and the exterior are via an aqueous medium inlet and the outlet in the form of the outlet tube. This might be, for instance, where the beverage preparation machine comprises a valve for varying the back pressure experienced by the beverage ingredients during beverage formation. Where such a valve is incorporated into the beverage preparation machine to adjust the back pressure it is necessary to provide a fluid-tight seal for the beverage formation chamber (or where a cartridge is used, a fluid-tight seal for the cartridge) to ensure the increased back pressure is maintained. However, it may also be desired that the same machine with such a valve can dispense beverages using an entrainer. Where, for example, the cartridge comprises an entrainer, it is necessary to provide a route for air from the exterior to reach the entrainer. In such a case it is advantageous that the air inlet route is via the outlet tube. The tube of the present disclosure is advantageous in such arrangements in ensuring that the outflowing stream of beverage travelling down the tube is less likely to 'choke off' a flow of air from the exterior of the beverage preparation machine which needs to travel up the tube at the same time.

The tube may have a minimum characteristic minimum dimension of 8 mm at the upstream end and/or a minimum characteristic internal dimension of 12 mm at the downstream end, and/or a minimum characteristic internal dimension of 10 mm at a location between the upstream and downstream ends of the tube.

The downstream end of the tube may be a terminal portion of the outlet path.

The downstream end of the tube may be adjacent an intermediate member for receiving the beverage discharged from the tube.

The tube may serve as an air inlet for supplying air from an exterior of the beverage preparation machine to the beverage.

The beverage preparation machine may comprise an entrainer for entraining air into the beverage. Alternatively, the beverage preparation machine may be configured to receive a cartridge containing the beverage ingredients, the cartridge comprising an entrainer for entraining air into the beverage.

The tube may form the sole air supply for supplying air from an exterior of the beverage preparation machine to the entrainer.

The tube may be constrictable in order to vary a pressure in a beverage formation chamber of the beverage preparation machine or in a cartridge received in the beverage preparation machine.

The characteristic internal dimension of the upstream end may be different from the characteristic internal dimension of the downstream end and wherein the characteristic internal dimension of the upstream end may be smaller than the characteristic internal dimension of the downstream end.

The downstream end of the tube may be asymmetrical in at least one plane and/or the downstream end of the tube may be non-circular in cross section and preferably:
(a) square;
(b) oval; or, most preferably,
(c) cassini oval
in cross section.

The downstream end of the tube may have at least one flat side and/or a wall of the tube at the downstream end of the tube may be chamfered either radially inwards or radially outwards.

A wall of the tube at the downstream end of the tube may have a thickness of less than 0.5 mm.

The downstream end of the tube may be non-perpendicular to a central axis of the tube.

In another aspect of the present disclosure there is disclosed a beverage preparation machine comprising a beverage formation chamber comprising an inlet for receiving an aqueous medium and an outlet for discharging a beverage formed by contacting the aqueous medium with one or more beverage ingredients, the beverage preparation machine further comprising an intermediate member positioned downstream of the beverage formation chamber outlet to receive the beverage, the intermediate member being located between the beverage formation chamber outlet and a receptacle that, in use, ultimately receives the beverage prepared by the beverage preparation machine;
wherein the intermediate member defines a cavity which, in use, receives the beverage from the beverage formation chamber outlet, the cavity comprising a base comprising a lowermost point and at least one region raised relative to the lowermost point;
the base comprising a plurality of apertures either:
including one or more apertures located at or towards the lowermost point of the base and one or more apertures located in the at least one region raised relative to the lowermost point; or
including one or more apertures arranged to extend at or towards the lowermost point into the at least one region raised relative to the lowermost point.

The base may be curved in more than one dimension and/or the base may be bowl-shaped.

The base may be a solid of revolution about a longitudinal axis of the intermediate member wherein the longitudinal axis passes through the lowermost point of the base and/or the base may be concave and have a constant radius of curvature.

In another aspect there is disclosed a system comprising a beverage preparation machine as described above and one or more cartridges containing one or more beverage ingredients.

The beverage preparation machine may be configurable to dispense a first type of cartridge which comprises an entrainer for entraining air into the beverage wherein an air supply route to an air inlet of the entrainer is via the tube, and may also be configurable to dispense a second type of cartridge which does not comprise an entrainer wherein foaming of the beverage is achieved using a variable geometry valve with consequent shearing and mixing of the beverage flowing through the valve.

In another aspect there is disclosed a method of preparing a beverage comprising the steps of:
forming a beverage in a beverage formation chamber of a beverage preparation machine;
discharging the beverage from the beverage formation chamber into constrictable tube;
constricting the tube to regulate flow of air in the tube towards the beverage formation chamber; and
dispensing the beverage into a receptacle.

In another aspect there is disclosed a method of preparing a beverage comprising the steps of:
forming a beverage in a beverage formation chamber of a beverage preparation machine;
discharging the beverage from the beverage formation chamber into a cavity of an intermediate member, the cavity comprising a base comprising a lowermost point and at least one region raised relative to the lowermost point, the base comprising a plurality of apertures including one or more apertures located at or towards the lowermost point of the base and one or more apertures located in the at least one region raised relative to the lowermost point;
passing the beverage through one or more of the plurality of apertures; and
dispensing the beverage into a receptacle.

With a relatively low volumetric flow of beverage into the cavity the beverage may have a tendency to pass through only the one or more apertures located at or towards the lowermost point of the curved base, and with a relatively higher volumetric flow of beverage into the cavity the beverage may have a tendency to fill the cavity so as to pass through the one or more apertures located in the at least one region raised relative to the lowermost point as well as through the one or more apertures located at or towards the lowermost point of the curved base.

On passing through the plurality of apertures, the beverage may flow along an underside of the base to consolidate into a single stream of beverage which separates from the intermediate member at a point at or near the lowermost point of the base.

The method may further comprise inserting a cartridge comprising one or more beverage ingredients into the beverage formation chamber.

Further inventive aspects which contribute to a larger layer of foam are also disclosed in the description.

Further aspects of the present invention are set out in the following numbered clauses:
1. A beverage preparation machine for forming a beverage by contacting an aqueous medium with one or more beverage ingredients,
   the beverage preparation machine comprising a tube forming at least a part of an outlet path for discharging the beverage to a receptacle;
   wherein the tube has an upstream end for receiving the beverage and a downstream end for discharging the beverage;
   wherein the upstream end has a characteristic internal dimension of at least 8 mm and the downstream end has a characteristic internal dimension of at least 10 mm.
2. A beverage preparation machine wherein the tube has a minimum characteristic minimum dimension of 8 mm at the upstream end and/or a minimum characteristic internal dimension of 12 mm at the downstream end, and/or a minimum characteristic internal dimension of 10 mm at a location between the upstream and downstream ends of the tube.
3. The beverage preparation machine of clause 1 or clause 2 wherein the downstream end of the tube is a terminal portion of the outlet path.
4. The beverage preparation machine of clause 1 or clause 2 wherein the downstream end of the tube is adjacent an intermediate member for receiving the beverage discharged from the tube.
5. The beverage preparation machine of any preceding clause wherein the tube serves as an air inlet for supplying air from an exterior of the beverage preparation machine to the beverage.
6. The beverage preparation machine of any preceding clause wherein the beverage preparation machine comprises an entrainer for entraining air into the beverage.
7. The beverage preparation machine of any of clauses 1 to 5 wherein the beverage preparation machine is configured to receive a cartridge containing the beverage ingredients, the cartridge comprising an entrainer for entraining air into the beverage.
8. The beverage preparation machine of clause 6 or clause 7 wherein the tube forms the sole air supply for supplying air from an exterior of the beverage preparation machine to the entrainer.
9. The beverage preparation machine of any preceding clause wherein the tube is constrictable in order to vary a pressure in a beverage formation chamber of the beverage preparation machine or in a cartridge received in the beverage preparation machine.
10. The beverage preparation machine of any preceding clause wherein the characteristic internal dimension of the upstream end is different from the characteristic internal dimension of the downstream end and wherein preferably the characteristic internal dimension of the upstream end is smaller than the characteristic internal dimension of the downstream end.
11. The beverage preparation machine of any preceding clause wherein the downstream end of the tube is asymmetrical in at least one plane and/or the downstream end of the tube is non-circular in cross section and preferably:
   (a) square;
   (b) oval; or, most preferably,
   (c) cassini oval
   in cross section.
12. The beverage preparation machine of any preceding clause wherein the downstream end of the tube has at least one flat side and/or a wall of the tube at the downstream end of the tube is chamfered either radially inwards or radially outwards.
13. The beverage machine of any preceding clause wherein a wall of the tube at the downstream end of the tube has a thickness of less than 0.5 mm.
14. The beverage preparation machine of any preceding clause wherein the downstream end of the tube is non-perpendicular to a central axis of the tube.
15. A beverage preparation machine comprising a beverage formation chamber comprising an inlet for receiving an aqueous medium and an outlet for discharging a beverage formed by contacting the aqueous medium with one or more beverage ingredients, the beverage preparation machine further comprising an intermediate member positioned downstream of the beverage formation chamber outlet to receive the beverage, the intermediate member being located between the beverage formation chamber outlet and a receptacle that, in use, ultimately receives the beverage prepared by the beverage preparation machine;
   wherein the intermediate member defines a cavity which, in use, receives the beverage from the beverage formation chamber outlet, the cavity comprising a base comprising a lowermost point and at least one region raised relative to the lowermost point;
   the base comprising a plurality of apertures either:
   including one or more apertures located at or towards the lowermost point of the base and one or more apertures located in the at least one region raised relative to the lowermost point; or
   including one or more apertures arranged to extend at or towards the lowermost point into the at least one region raised relative to the lowermost point.
16. The beverage preparation machine of clause 15 wherein the base is curved in more than one dimension and/or the base is bowl-shaped.
17. The beverage preparation machine of any of clauses 15 to 16 wherein the base is a solid of revolution about a longitudinal axis of the intermediate member wherein the longitudinal axis passes through the lowermost point of the base and/or the base is concave and has a constant radius of curvature.
18. The beverage preparation machine having all of the features of clause 1 and all of the features of clause 15 wherein the downstream end of the tube of clause 1 feeds into the intermediate member of clause 15.
19. A system comprising a beverage preparation machine as in any preceding clause and one or more cartridges containing one or more beverage ingredients.
20. The system of clause 19 wherein the beverage preparation machine is configurable to dispense a first type of cartridge which comprises an entrainer for entraining air into the beverage wherein an air supply route to an air inlet of the entrainer is via the tube, and is also configurable to dispense a second type of cartridge which does not comprise an entrainer wherein foaming of the beverage is achieved using a variable geometry valve with consequent shearing and mixing of the beverage flowing through the valve.
21. A method of preparing a beverage comprising the steps of:
   forming a beverage in a beverage formation chamber of a beverage preparation machine;
   discharging the beverage from the beverage formation chamber into constrictable tube;
   constricting the tube to regulate flow of air in the tube towards the beverage formation chamber; and
   dispensing the beverage into a receptacle.
22. A method of preparing a beverage comprising the steps of:
   forming a beverage in a beverage formation chamber of a beverage preparation machine;
   discharging the beverage from the beverage formation chamber into a cavity of an intermediate member, the cavity comprising a base comprising a lowermost point and at least one region raised relative to the lowermost point, the base comprising a plurality of apertures including one or more apertures located at or towards the lowermost point of the base and one or more apertures located in the at least one region raised relative to the lowermost point;
   passing the beverage through one or more of the plurality of apertures; and
   dispensing the beverage into a receptacle.
23. The method of clause 22 wherein with a relatively low volumetric flow of beverage into the cavity the beverage has a tendency to pass through only the one or more apertures located at or towards the lowermost point of the curved base, and with a relatively higher volumetric flow of beverage into the cavity the beverage has tendency to fill the cavity so as to pass through the one or more apertures located in the at least one region raised relative to the lowermost point as well as through the one or more apertures located at or towards the lowermost point of the curved base.
24. The method of clause 22 or clause 23 wherein on passing through the plurality of apertures, the beverage flows along an underside of the base to consolidate into a single stream of beverage which separates from the intermediate member at a point at or near the lowermost point of the base.
25. The method of any of clauses 21 to 24 further comprising inserting a cartridge comprising one or more beverage ingredients into the beverage formation chamber.

Aspects of the disclosure will now be described with reference to specific embodiments as illustrated in the accompanying drawings in which:
Figure 1 shows a schematic view of a beverage preparation machine according to the disclosure;
Figure 2 shows a schematic view, from a side, of a tube 120 corresponding to an outlet of a beverage formation chamber of the beverage preparation machine according to the disclosure;
Figure 3 shows a schematic view, from a downstream end, of a tube 120 wherein the tube is circular in cross-section;
Figure 4 shows a schematic view, from a downstream end, of a tube 120 wherein the tube is square in cross section;
Figure 5 shows a schematic view, from a side, of a tube 120 having an asymmetrical downstream end;
Figure 6 shows a perspective view of an underside of a base of an intermediate member according to a first embodiment;
Figure 7 shows a perspective view of the intermediate member of Figure 2 from a different orientation;
Figure 8a shows a perspective view of an underside of a base of an intermediate member according to a second embodiment;
Figure 8b shows the intermediate member of Figure 8a but with an alternative arrangement of apertures.
Figure 9 shows a perspective view of the intermediate member of Figures 8a and 8b from a different orientation;
Figure 10 shows a perspective view of a base of an intermediate member according to a third embodiment;
Figure 11 shows a perspective view of an underside of a base of an intermediate member according to a fourth embodiment;
Figure 12 shows a perspective view of the intermediate member of Figure 11 from a different orientation;
Figure 13 illustrates various further options for configurations of tube 120 and or spigot according to an aspect of the present disclosure;
Figure 14 shows a preferred embodiment of the tube aspect of the disclosure;
Figures 15 to 17 illustrate schematically a variable geometry valve that may be utilised as part of the above embodiments; and
Figures 18 to 29 illustrate an exemplar cartridge that may be used as part of the above embodiments.

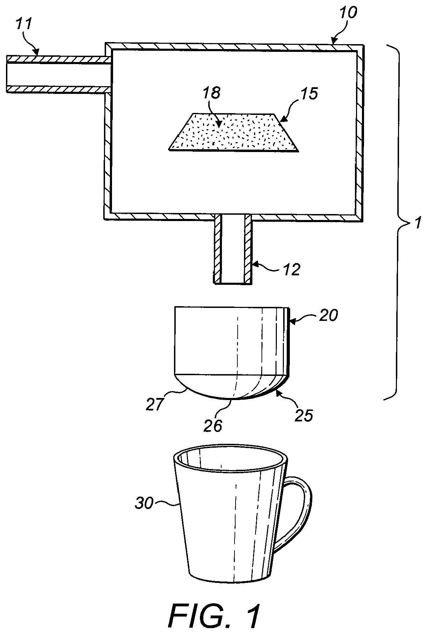

A beverage preparation machine 1 in accordance with the disclosure of the application is illustrated schematically in Figure 1.

The beverage preparation machine 1 comprises a beverage formation chamber 10 comprising an inlet 11 for receiving an aqueous medium and an outlet 12 for discharging of beverage formed by contacting the aqueous medium with one or more beverage ingredients 18. In the illustrated embodiment, the beverage ingredients 18 are contained in a cartridge 15 which is insertable (either manually by a user or automatically) into the beverage formation chamber. The cartridge, in this case, is designed to contain sufficient quantity of beverage ingredients to produce a single beverage. In an alternative arrangement, the beverage formation chamber 10 may contain the beverage ingredients 18 directly received into the chamber 10, for example the beverage formation chamber 10 may be a group handle of an espresso machine that receives tamped roast and ground coffee.

In a first aspect of the disclosure, the beverage formation chamber outlet 12 comprises a tube 120 or other conduit. The tube 120 may be an integral part of the chamber outlet 12 or a separately connected component. Where the tube 120 is a separately connected component, it may be directly or indirectly connected to the outlet 12.

The tube 120 may comprise a spigot and a pipe wherein the spigot is a part of the outlet 12 and the pipe attaches onto the spigot.

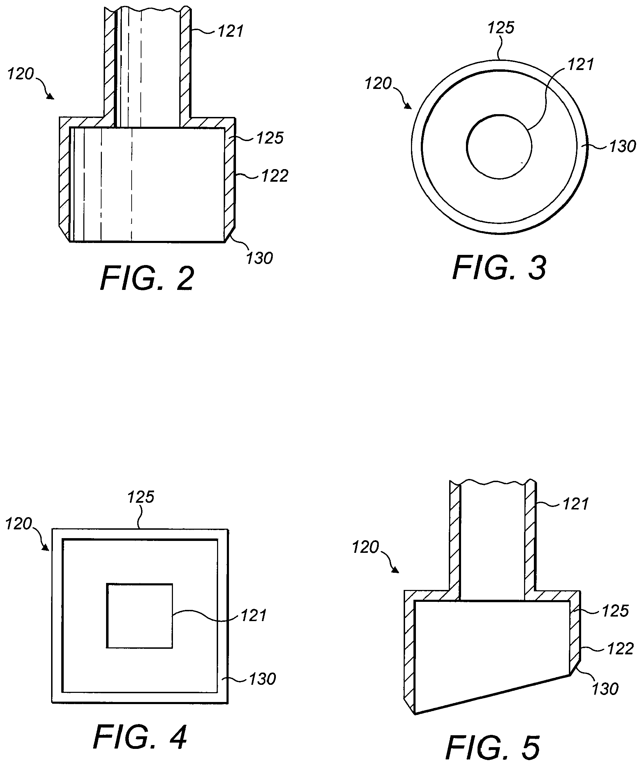

The tube 120 may have any cross sectional shape. For example, it may be circular (Figure 3), square (Figure 4), oval, rectangular, or any other shape. The cross sectional shape of the tube 120 may be irregular. The cross sectional shape may change along the length of the tube 120. For example, the cross section of the tube 120 may change from circular to square.

In the illustrated embodiments, the tube 120 has a characteristic internal dimension which is narrower at an upstream end of the tube 121 than at a downstream end of the tube 122. In the case of a tube 120 with circular cross-section, the characteristic internal dimension of the tube at a particular point along its length means the diameter of the tube at that point. In the case of a tube 120 with a non-circular cross-section, the characteristic internal dimension at a particular point along its length means the maximum internal width of the tube at that point. Thus, for a tube with a square cross section at a particular point along its length, the characteristic internal dimension is the length of the diagonal of the square at that point.

The tube may have a bulge at a particular region along its length, such that the characteristic internal dimension of the tube in that region is greater than the characteristic internal dimension in parts of the tube outside that region.

In the embodiments of Figures 2 to 5, the tube 120 is chamfered outwardly 130 at the downstream end 122. The tube 120 may alternatively be chamfered inwardly at the downstream end 122. Chamfering at the downstream end 122 causes the thickness of the tube wall 125 to be reduced at the downstream end such that liquid has less resistance to detaching from the wall at the end of the tube 120.

The downstream end 122 of the tube 120 may have a central axis which is offset from a central axis of the upstream end 121 of the tube 120.

In one embodiment, the characteristic internal dimension of the upstream end 121 of the tube is 8 mm while the characteristic internal dimension of the downstream end 122 of the tube 120 is 10 mm. In another embodiment the characteristic internal dimension of the upstream end 121 and the downstream end 122 of the tube 120 may be larger. For example, the characteristic internal dimensions of the upstream and downstream ends (121, 122) of the tube may be 10 mm and 12½ mm, respectively.

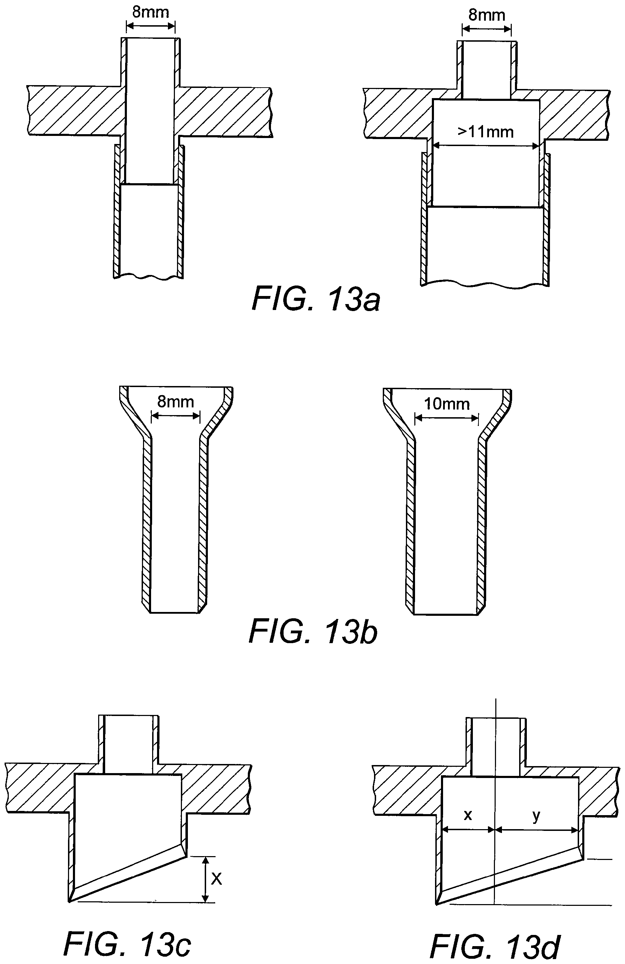

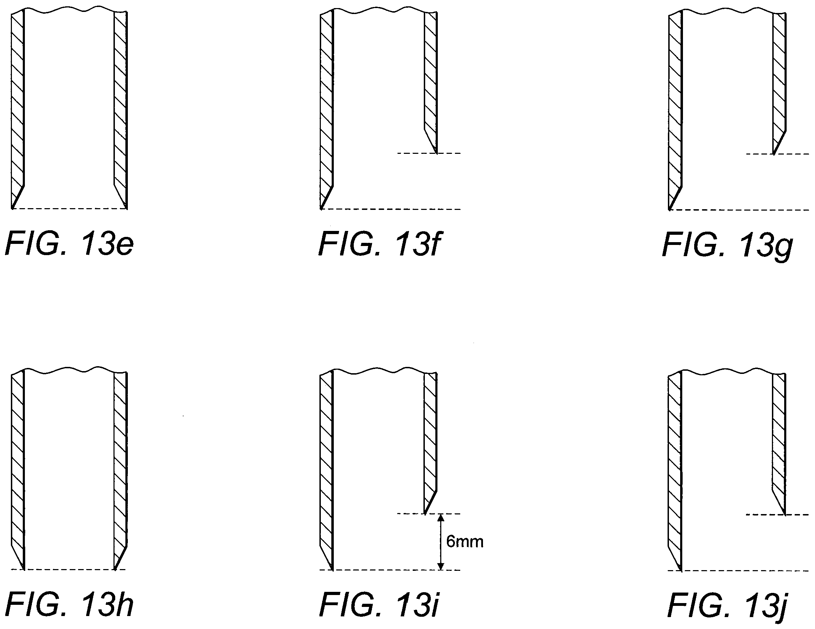

Various alternative arrangements of tube 120 as contemplated within the scope of the present disclosure are illustrated in Figure 13. The arrangements of Figure 13 may, in devices where the tube comprises a spigot and a pipe, relate only to the spigot to which a pipe (not illustrated) may be attached. Alternatively, the arrangements of Figure 13 may relate to the entire tube.

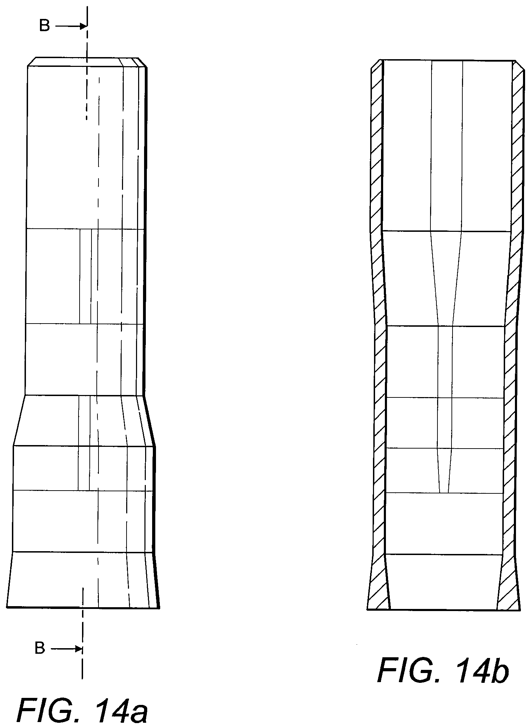

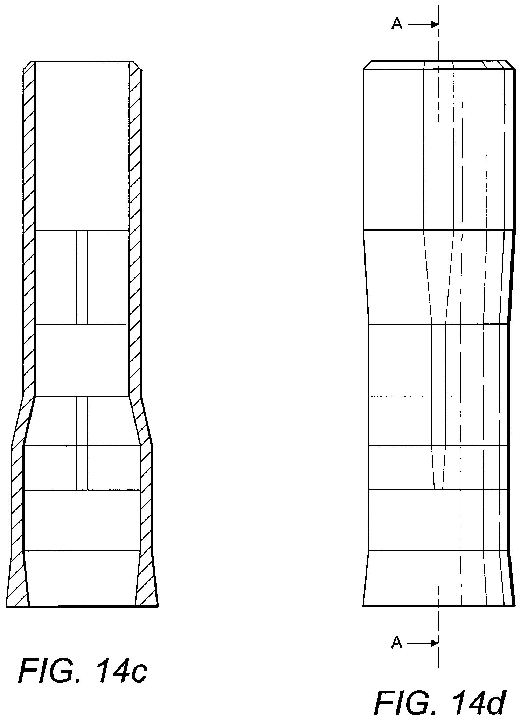

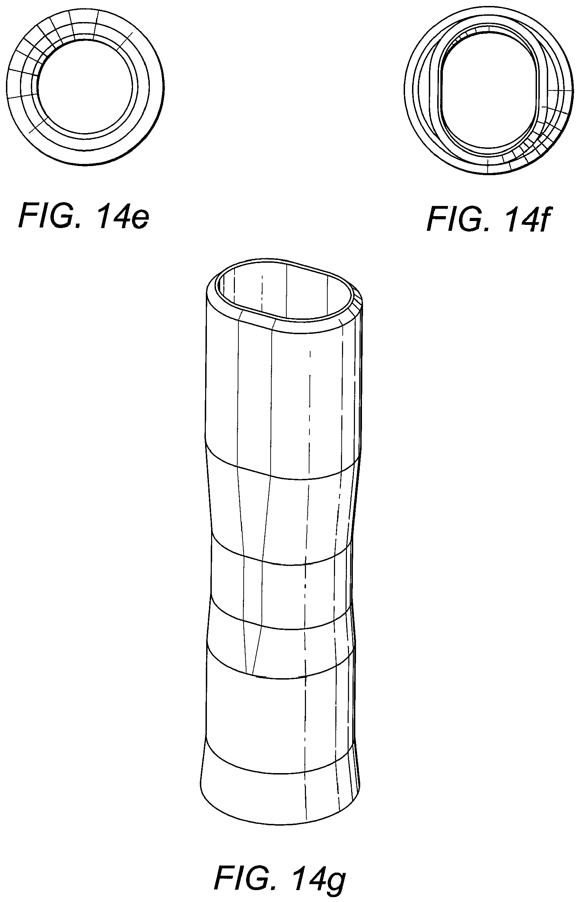

A preferred tube arrangement, according to this aspect of the disclosure, is illustrated in Figure 14. The tube has a cross sectional shape and size which varies along its length. At the upstream end the cross-sectional shape is circular while at the downstream end the cross-section has the shape of an approximate cassini oval having two opposed rounder elements of perimeter each joined by two opposed flatter elements of perimeter. The tube has a minimum characteristic internal dimension of 8 mm at the upstream end, a minimum characteristic internal dimension of 12 mm at the downstream end and a minimum characteristic internal dimension of 10 mm at a location between the upstream and downstream ends of the tube.

The beverage preparation machine 1 may have a valve downstream of the beverage formation chamber 10 to control the back pressure experienced by the beverage ingredients 18 during beverage formation - for example partially closing the valve may increase the extraction pressure of roast and ground coffee held within a cartridge 15. The valve may form part of, or engage a part of, the tube 120 or may be part of the outlet path of the beverage downstream of the beverage formation chamber 10 but upstream of the tube 120.

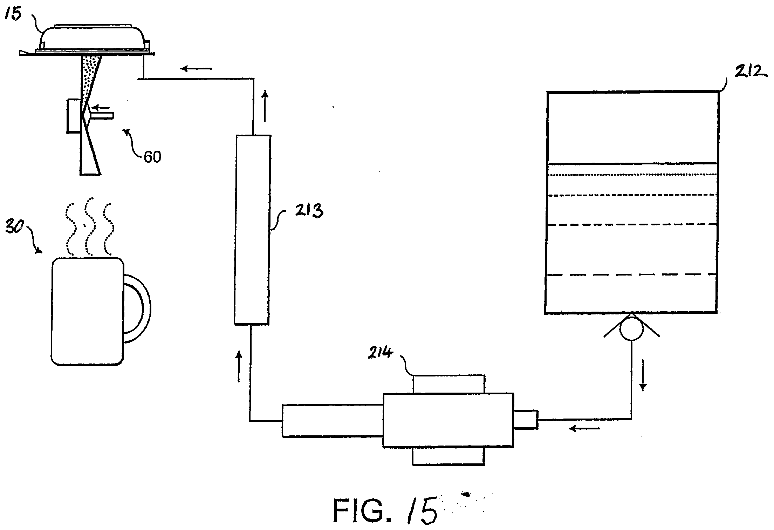

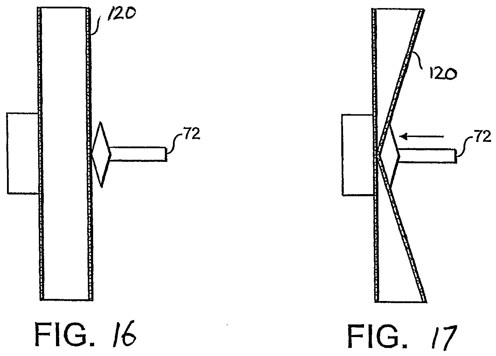

One mechanism for controlling the back pressure in the beverage formation chamber is to incorporate a variable geometry valve 60, an example of which is shown schematically in Figures 15 to 17. The valve 60 may be a pinch valve comprising a clamping mechanism 72. In an unrestricted position (Figure 16) the beverage flows freely through the tube 120. To increase the back pressure the clamping mechanism 72 is activated to provide a restricted position in which the flow area of the tube 120 is reduced (shown schematically in Figure 17 - note the flow area can be reduced to zero if there is a wish to temporarily close the valve 60). As such, the valve 60 can adopt the following configurations:
1. Open
2. Restricted
3. Closed

The valve 60 may be controlled automatically by a control processor of the machine 1. Once the type of cartridge 15 inserted into the machine 1 has been identified, by the decoding of, for example, a barcode, the control processor may select the correct initial setting and, if appropriate, any subsequent operation of the valve 60 for the relevant beverage type.

The machine 1 can operate in a range of modes, with the valve 60 in one or more operating positions, some examples of which are:-

### 1. Valve Open Throughout The Brewing Cycle

When the valve 60 is in its open position the operating pressure may be below 2 bar allowing a steady state through flow rate of up to 400 ml/min. This mode may be appropriate for preparing low pressure beverages, such as tea, foamed milk or chocolate.

### 2. Valve Restricted Throughout The Brewing Cycle

When the valve 60 is in its restricted position it creates a relatively high back pressure within the cartridge 15 (or beverage formation chamber 10), which results in an operating pressure of up to 4, 6 or even 9 bar and provides a steady state through flow rate of 60 to 300 ml/min. This is sufficient to obtain the necessary solids extraction and emulsification of oils in the beverage ingredients 200 for an espresso beverage. The consequential restriction in the beverage outlet provides a shearing and mixing action in the beverage flowing through the valve 60, giving rise to good air/liquid emulsification and resulting in an improved crema. This mode can advantageously be used for preparing higher pressure beverages, such as espressos and cappuccinos.

### 3. Valve Closed Then Restricted

If the valve 60 is closed immediately at the start of the brewing cycle (before a pump of the machine 1 commences operation), this enables a higher pressure to be developed within the cartridge 15 than when the valve 60 is in its restricted position.

If required, the valve 60 can be pulsed between various positions during the brewing cycle, or a part thereof. This manner of valve operation during the delivery cycle enables beverages with a crema having a graduated colour and/or bubble size to be produced.

Other types of valve may be used for the valve 60, such as ball valves, sleeve valves, seat valves or disc valves.

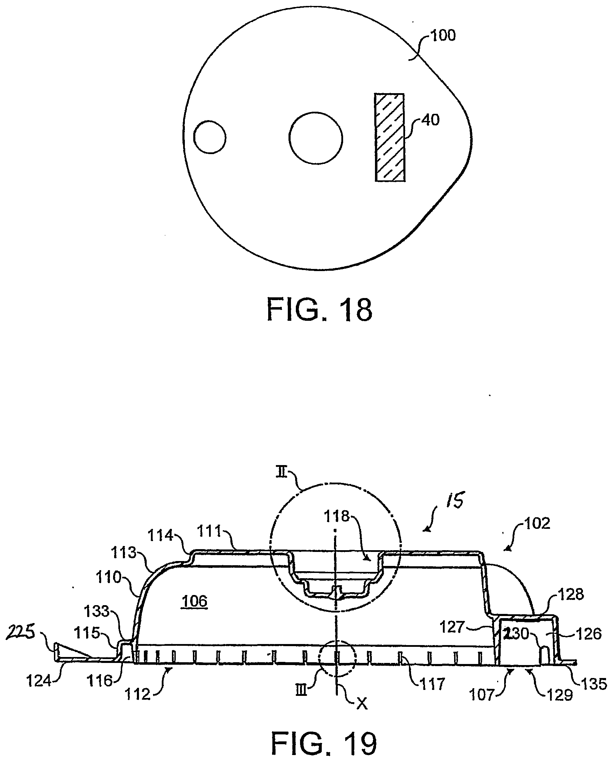

As noted above, the outlet tube 120 may be used with a machine that receives a cartridge 15 containing the beverage ingredients 18. A wide range of cartridges, pads, capsules, etc. can be used with the outlet tube 120. The following description provides one example of cartridge 15 which may be used wherein the cartridge 15 is provided with an entrainer for incorporating air into the beverage, as shown in Figures 18 to 29.

The cartridge 15 generally comprises an outer member 102, an inner member 103 and a laminate 105. The outer member 102, inner member 103 and laminate 105 are assembled to form the cartridge 15 which has an interior 106 for containing one or more beverage ingredients, an inlet 107, an outlet 108 and a beverage flow path linking the inlet 107 to the outlet 108 and which passes through the interior 106. The inlet 107 and outlet 108 are initially sealed by the laminate 105 and are opened in use by piercing or cutting of the laminate 105.

The illustrated example of the cartridge 15 is particularly designed for use in dispensing espresso-style products such as roast and ground coffee where it is desirable to produce a crema.

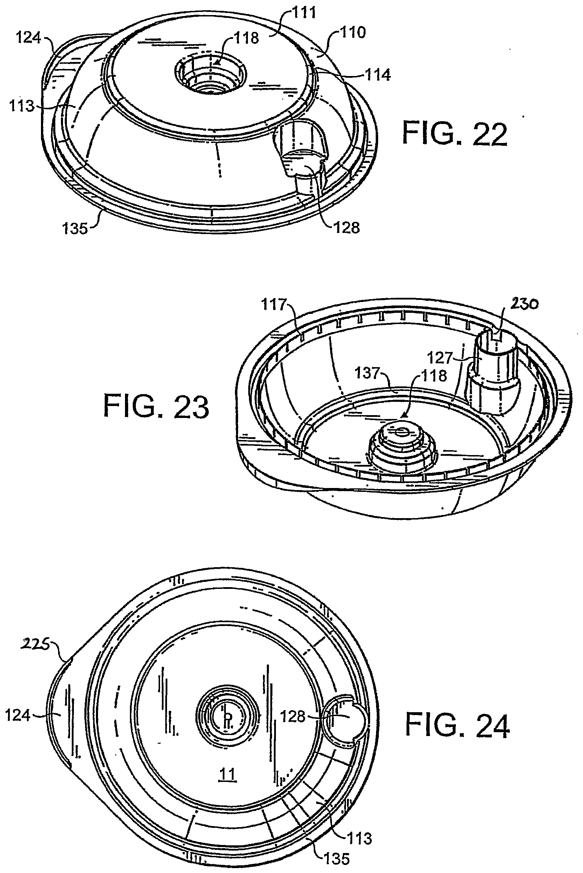

As can be seen from Figure 23, the overall shape of the cartridge 15 is generally circular or disc-shaped with the diameter of the cartridge 15 being significantly greater than its height. A major axis X passes through the centre of the outer member as shown in Figure 19. Typically the overall diameter of the outer member 102 is 74.5 mm ±6mm and the overall height is 16 mm ±3mm. Typically the volume of the cartridge 15 when assembled is 30.2 ml ±20%.

The outer member 102 generally comprises a bowl-shaped shell 110 having a curved annular wall 113, a closed top 111 and an open bottom 112. The diameter of the outer member 102 is smaller at the top 111 compared to the diameter at the bottom 112, resulting from a flaring of the annular wall 113 as one traverses from the closed top 111 to the open bottom 112. The annular wall 113 and closed bottom 112 together define a receptacle having an interior 134.

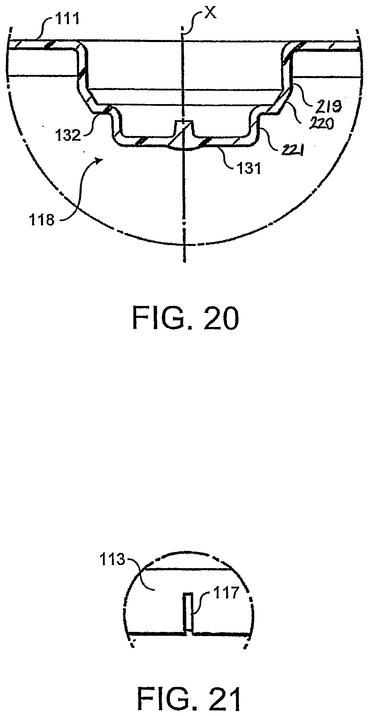

A hollow inwardly directed cylindrical extension 118 is provided in the closed top 111 centred on the major axis X. As more clearly shown in Figure 20, the cylindrical extension 18 comprises a stepped profile having first, second and third portions 219, 220 and 221. The first portion 219 is right circular cylindrical. The second portion 220 is frusto-conical in shape and is inwardly tapered. The third portion 221 is another right circular cylinder and is closed off by a lower face 131. The diameter of the first, second and third portion 219, 220 and 221 incrementally decreases such that the diameter of the cylindrical extension 118 decreases as one traverses from the top 111 to the closed lower face 131 of the cylindrical extension 118. A generally horizontal shoulder 132 is formed on the cylindrical extension 118 at the junction between the second and third portions 220 and 221.

An outwardly extending shoulder 133 is formed in the outer member 102 towards the bottom 112. The outwardly extending shoulder 133 forms a secondary wall 115 co-axial with the annular wall 113 so as to define an annular track forming a manifold 116 between the secondary wall 115 and the annular wall 113. The manifold 116 passes around the circumference of the outer member 102. A series of slots 117 are provided in the annular wall 113 level with the manifold 116 to provide gas and liquid communication between the manifold 116 and the interior 134 of the outer member 102. As shown in Figure 21, the slots 117 comprise vertical slits in the annular wall 113. Between twenty and forty slots are provided. In the embodiment shown thirty-seven slots 117 are provided generally equi-spaced around the circumference of the manifold 16. The slots 117 are preferably between 1.4 and 1.8 mm in length. Typically the length of each slot 117 is 1.6 mm representing 10% of the overall height of the outer member 102. The width of each slot 117 is between 0.25 and 0.35 mm. Typically, the width of each slot 117 is 0.3 mm. The width of the slots 117 is sufficiently narrow to prevent the beverage ingredients passing there through into the manifold 116 either during storage or in use.

An inlet chamber 126 is formed in the outer member 102 at the periphery of the outer member 102. A cylindrical wall 127 is provided, as most clearly shown in Figure 23, which defines the inlet chamber 126 within, and partitions the inlet chamber 126 from, the interior 134 of the outer member 102. The cylindrical wall 127 has a closed upper face 128 which is formed on a plane perpendicular to the major axis X and an open lower end 129 co-planar with the bottom 12 of the outer member 102. The inlet chamber 26 communicates with the manifold 116 via two slots 230 as shown in Figure 19. Alternatively, between one and four slots may be used to communicate between the manifold 116 and the inlet chamber 126.

A lower end of the outwardly extending shoulder 133 is provided with an outwardly extending flange 135 which extends perpendicularly to the major axis X. Typically the flange 135 has a width of between 2 and 4 mm. A portion of the flange 135 is enlarged to form a handle 124 by which the outer member 102 may be held. The handle 124 is provided with an upturned rim 225 to improve grip.

The outer member 102 is formed as a single integral piece from high density polyethylene, polypropylene, polystyrene, polyester, or a laminate of two or more of these materials. A suitable polypropylene is the range of polymers available from DSM UK Limited (Redditch, United Kingdom). The outer member may be opaque, transparent or translucent. The manufacturing process may be injection moulding.

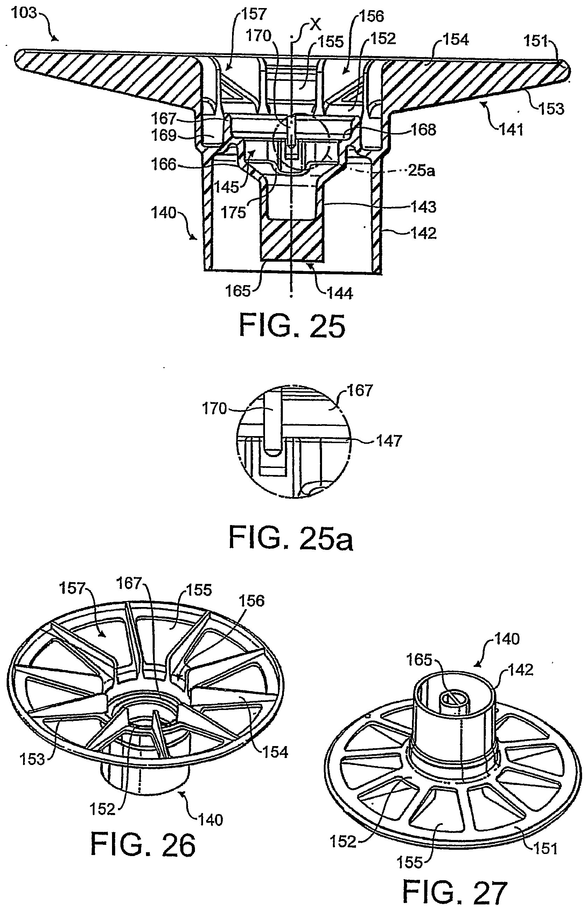

The inner member 103, as shown in Figures 25 to 28, comprises an annular frame 141 and a downwardly extending cylindrical funnel 140. A major axis X passes through the centre of the inner member 103 as shown in Figure 25.

As best shown in Figures 26 and 27, the annular frame 141 comprises an outer rim 151 and an inner hub 152 joined by ten equi-spaced radial spokes 153. The inner hub 152 is integral with and extends from the cylindrical funnel 140. Filtration apertures 155 are formed in the annular frame 141 between the radial spokes 153. A filter 104 is disposed on the annular frame 141 so as to cover the filtration apertures 155. The filter is preferably made from a material with a high wet strength, for example a non-woven fibre material of polyester. Other materials which may be used include a water-impermeable cellulosic material, such as a cellulosic material comprising woven paper fibres. The woven paper fibres may be admixed with fibres of polypropylene, polyvinyl chloride and/or polyethylene. The incorporation of these plastic materials into the cellulosic material renders the cellulosic material heat-sealable. The filter 104 may also be treated or coated with a material which is activated by heat and/or pressure so that it can be sealed to the annular frame 141 in this way.

As shown in the cross-sectional profile of Figure 25, the inner hub 152 is located at a lower position than the outer rim 151, resulting in the annular frame 141 having a sloping lower profile.

The upper surface of each spoke 153 is provided with an upstanding web 154 which divides a void space above the annular frame 141 into a plurality of passages 157. Each passage 157 is bounded on either side by a web 154 and on a lower face by the filter 104. The passages 157 extend from the outer rim 151 downwardly towards, and open into, the cylindrical funnel 140 at openings 156 defined by the inner extremities of the webs 154.

The cylindrical funnel 140 comprises an outer tube 142 surrounding an inner discharge spout 143. The outer tube 142 forms the exterior of the cylindrical funnel 140. The discharge spout 143 is joined to the outer tube 142 at an upper end of the discharge spout 143 by means of an annular flange 147. The discharge spout 143 comprises an inlet 145 at an upper end which communicates with the openings 156 of the passages 157 and an outlet 144 at a lower end through which the prepared beverage is discharged into a cup or other receptacle. The profile of the discharge spout 43 comprises a stepped profile with a distinct dog-leg 166 near an upper end of the tube 143.

As shown in Figure 25, the discharge spout 143 is provided with a partition 165 which extends part way up the discharge spout 143 from the outlet 144. The partition 165 helps to prevent the beverage spraying and/or splashing as it exits the discharge spout 143.

A rim 167 is provided upstanding from the annular flange 147 joining the outer tube 142 to the discharge spout 143. The rim 167 surrounds the inlet 145 to the discharge spout 143 and defines an annular channel 169 between the rim 167 and the upper portion of the outer tube 142. The rim 167 is provided with an inwardly directed shoulder 168. At one point around the circumference of the rim 167 an aperture 170 is provided in the form of a slot which extends from an upper edge of rim 167 to a point marginally below the level of the shoulder 168 as most clearly shown in Figures 25 and 25a. The slot has a width of 0.64 mm.

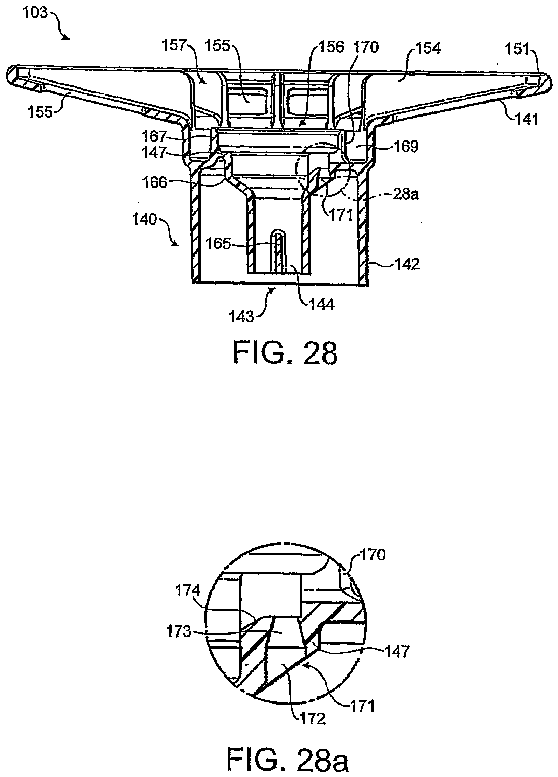

An air inlet 171 is provided in annular flange 147 circumferentially aligned with the aperture 170 as shown in Figures 28 and 28a. The air inlet 171 comprises an aperture passing through the flange 147 so as to provide communication between a point above the flange 147 and the void space below the flange 147 between the outer tube 142 and discharge spout 143. Preferably, and as shown, the air inlet 171 comprises an upper frusto-conical portion 173 and a lower cylindrical portion 172. The air inlet 171 is typically formed by a mould tool such as a pin. The tapered profile of the air inlet 171 allows the mould tool to be more easily removed from the moulded component. The wall of the outer tube 142 in the vicinity of the air inlet 171 is shaped to form a chute leading from the air inlet 171 to the inlet 145 of the discharge spout 143. As shown in Figure 28a, a canted shoulder 174 is formed between the air inlet 171 and the chute to ensure that the jet of beverage issuing from the slot 170 does not immediately foul on the upper surface of the flange 147 in the immediate vicinity of the air inlet 171.

The inner member 103 may be formed as a single integral piece from polypropylene or a similar material as described above and by injection moulding in the same manner as the outer member 102.

Alternatively, the inner member 103 and/or the outer member 102 may be made from a biodegradable polymer. Examples of suitable materials include degradable polyethylene (for example, SPITEK supplied by Symphony Environmental, Borehamwood, United Kingdom), biodegradable polyester amide (for example, BAK 1095 supplied by Symphony Environmental), poly lactic acids (PLA supplied by Cargil, Minnesota, USA), starch-based polymers, cellulose derivatives and polypeptides.

The laminate 105 is formed from two layers, a first layer of aluminium and a second layer of cast polypropylene. The aluminium layer is between 0.02 and 0.07 mm in thickness. The cast polypropylene layer is between 0.025 and 0.065 mm in thickness. In one embodiment the aluminium layer is 0.06 mm and the polypropylene layer is 0.025 mm thick. This laminate 105 is particularly advantageous as it has a high resistance to curling during assembly. As a result the laminate 105 may be pre-cut to the correct size and shape and subsequently transferred to the assembly station on the production line without undergoing distortion. Consequently, the laminate 108 is particularly well suited to welding. Other laminate materials may be used including PET/Aluminium/PP, PE/EVOH/PP, PET/metallised/PP and Aluminium/PP laminates. Roll laminate stock may be used instead of die cut stock.

The cartridge 15 may be closed by a rigid or semi-rigid lid instead of a flexible laminate 105.

Assembly of the cartridge 15 involves the following steps:
a) the inner member 103 is inserted into the outer member 102;
b) the filter 104 is cut to shape and placed onto the inner member 103 so to be received over the cylindrical funnel 140 and come to rest against the annular frame 141;
c) the inner member 103, outer member 102 and filter 104 are joined by ultrasonic welding;
d) the cartridge 15 is filled with one or more beverage ingredients;
e) the laminate 105 is affixed to the outer member 102.

The outer member 103 is orientated with the open bottom 112 directed upwards. The inner member 103 is then inserted into the outer member 102 with the outer rim 151 being received as a loose fit in an axial extension 114 at top 111 of the cartridge 15. The cylindrical extension 118 of the outer member 102 is at the same time received in the upper portion of the cylindrical funnel 140 of the inner member 103.

The third portion 221 of the cylindrical extension 118 is seated inside the support rim 167. The shoulder 132 of the cylindrical extension 118 between the second portion 220 and third portion 221 bears against the upper edge of the support rim 167 of the inner member 103. An interface zone is thus formed between the inner member 103 and the outer member 102 comprising a face seal between the cylindrical extension 118 and the support rim 167 which extends around nearly the whole circumference of the cartridge 15. The seal between the cylindrical extension 118 and the support rim 167 is not fluid-tight though since the slot 170 in the support rim 167 extends through the support rim 167 and downwardly to a point marginally below the shoulder 168. Consequently the interface fit between the cylindrical extension 118 and the support rim 167 transforms the slot 170 into an aperture providing gas and liquid communication between the annular channel 169 and the discharge spout 143. The aperture is typically 0.64 mm wide by 0.69 mm long.

The filter 104 is then placed over the inner member 103 such that the filter material contacts the annular rim 151. An ultrasonic welding process is then used to join the filter 104 to the inner member 103 and at the same time, and in the same process step, the inner member 103 to the outer member 102. The inner member 103 and filter 104 are welded around the outer rim 151. The inner member 103 and outer member 102 are joined by means of weld lines around the outer rim 151 and also the upper edges of the webs 154.

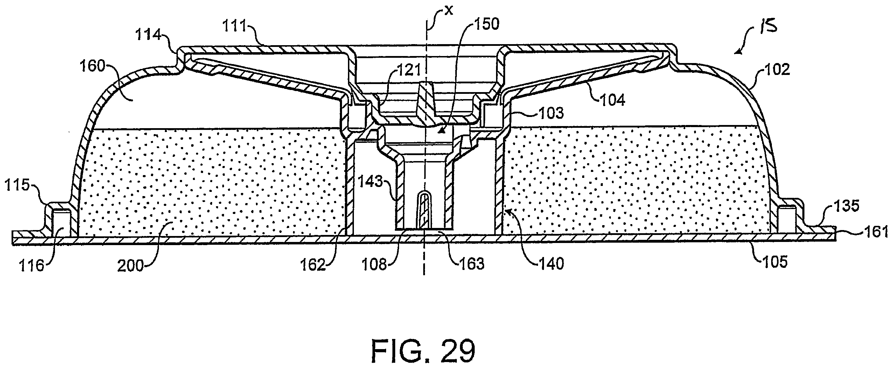

As shown most clearly in Figure 29, the outer member 102 and inner member 103 when joined together define a void space in the interior 106 below the annular flange 141 and exterior the cylindrical funnel 140 which forms a filtration chamber. The filtration chamber 160 and passages 157 above the annular frame 141 are separated by the filter paper 104.

The filtration chamber 160 contains the one or more beverage ingredients 200. The one or more beverage ingredients 200 are packed into the filtration chamber 160. For an espresso-style beverage the ingredient is typically roast and ground coffee. The density of packing of the beverage ingredients in the filtration chamber 230 can be varied as desired. Typically, for a filtered coffee product the filtration chamber contains between 5.0 and 10.2 grams of roast and ground coffee in a filtration bed of thickness of typically 5 to 14 mm.

The laminate 105 is then affixed to the outer member 102 by forming a weld 161 around the periphery of the laminate 105 to join the laminate 105 to the lower surface of the outwardly extending flange 135. The weld 161 is extended to seal the laminate 105 against the lower edge of the cylindrical wall 127 of the inlet chamber 126. Further, a weld 162 is formed between the laminate 105 and the lower edge of the outer tube 142 of the cylindrical funnel 140. The laminate 105 forms the lower wall of the filtration chamber 160 and also seals the inlet chamber 126 and cylindrical funnel 140. However, a small gap 163 exists prior to dispensation between the laminate 105 and the lower edge of the discharge spout 43. A variety of welding methods may be used, such as heat and ultrasonic welding, depending on the material characteristics of the laminate 105.

In use water, under pressure, enters the cartridge 15 through the inlet 107 into the inlet chamber 126. From there the water is directed to flow through the slots 117 and round the manifold 116 and into the filtration chamber 160 of the cartridge 1 through the plurality of slots 117. The water is forced radially inwardly through the filtration chamber 160 and mixes with the beverage ingredients 200 contained therein. The water is at the same time forced upwardly through the beverage ingredients 200. The beverage formed by passage of the water through the beverage ingredients 200 passes through the filter 104 and filtration apertures 155 into the passages 157 lying above the annular frame 141.

Beverage in the radial passages 157 flows downwardly along the passages 157 formed between the webs 154 and through the openings 156 and into the annular channel 169 of the cylindrical funnel 140. From the annular channel 169 the beverage is forced under pressure through the aperture 128 by the back pressure of beverage collecting in the filtration chamber 160 and passages 157. The beverage is thus forced through aperture as a jet and into an expansion chamber formed by the upper end of the discharge spout 143. As shown in Figure 29, the jet of beverage passes directly over the air inlet 171. Passage of the beverage through the restriction of the aperture causes the pressure of the beverage to be reduced. As the beverage enters the discharge spout 143 the pressure of the beverage is still relatively low. As a result air is entrained into the beverage stream in the form of a multitude of small air bubbles as air from an exterior of the cartridge 15 is drawn up through the air inlet 171. The jet of beverage issuing from the aperture is funnelled downwards to the outlet 144 where the beverage is discharged into the outlet tube 120 described above and from there on into a receptacle such as a cup where the air bubbles form the desired crema. Thus, the aperture and the air inlet 171 together form an air entrainer which acts to entrain air into the beverage.

It may be desirable for the beverage formation chamber 10 (or cartridge 15 within the chamber 10) to be sealed during use such that the only fluid connections between the beverage ingredients and the exterior are via the aqueous medium inlet 11 and the outlet 12 in the form of the outlet tube 120. This might be, for instance, where the beverage preparation machine comprises a valve 60 as described above for varying the back pressure. Where a valve such as valve 60 is incorporated into the beverage preparation machine 1 to adjust the back pressure it is necessary to provide a fluid-tight seal for the beverage formation chamber 10 (or where a cartridge 15 a fluid-tight seal for the cartridge) to ensure the increased back pressure is maintained. However it may also be desired that the same machine with a valve 60 can dispense cartridges having an entrainer. Where the cartridge 15 comprises an entrainer as described above, it is necessary to provide a route for air from the exterior to reach the air inlet 171. In such a case it is advantageous that the air inlet route is via the outlet tube 120. It has been found that the tube 120 of the present disclosure is advantageous in such arrangements in ensuring that the outflowing stream of beverage travelling down the tube 120 is less likely to 'choke off' a flow of air from the exterior of the beverage preparation machine which needs to travel up the tube 120 at the same time.

According to a second aspect of the disclosure, the beverage preparation machine comprises an intermediate member 20 located between the beverage formation chamber outlet 12 and a receptacle 30 which ultimately receives the beverage prepared by the beverage preparation machine 1. The receptacle 30 might, for example, be a cup, mug, jug or similar.

The intermediate member 20 defines a cavity which, in use, receives the beverage from the beverage formation chamber outlet 12. The cavity 20 comprises a base 25 comprising a lowermost point 26 and at least one region 27 raised relative to the lowermost point. The base 25 comprises a plurality of apertures 28 including one or more apertures located at or towards the lowermost point 26 of the base 25 and one or more apertures located in the at least one region 27 raised relative to the lowermost point 26. Alternatively, one or more of the plurality of apertures 28 is arranged to extend from at or towards the lowermost point 26 into at least one region 27 raised relative to the lowermost point 26.

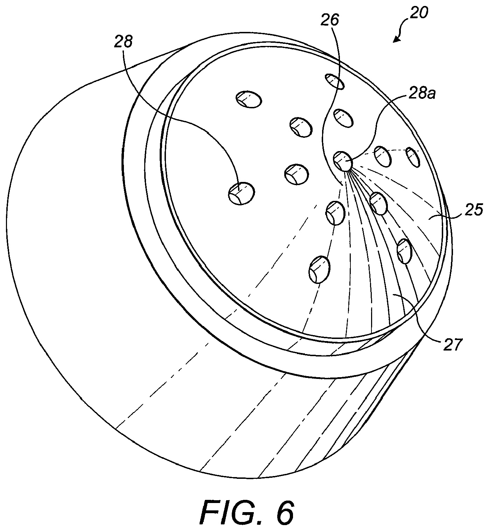

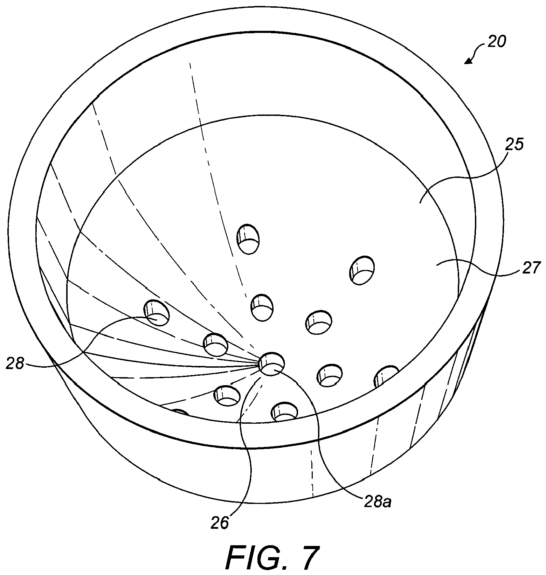

The intermediate member 20 of one embodiment is illustrated in Figures 6 and 7. The base 25 of the intermediate member 20 of this embodiment is dome-shaped. It comprises a range of apertures 28 distributed across the dome including one 28a at the lowermost point of the base (in this case in the middle of the dome) and various further apertures 28 located away from the centre of the dome, i.e. in the at least one region 27 raised relative to the lowermost point 26. The lowermost point is the lowermost point when in situ in a beverage preparation machine wherein the apertures are towards the base is towards the lower end of the intermediate member so that the beverage flows, under gravity, through the apertures and out of the beverage preparation machine towards the receptacle (i.e. cup).

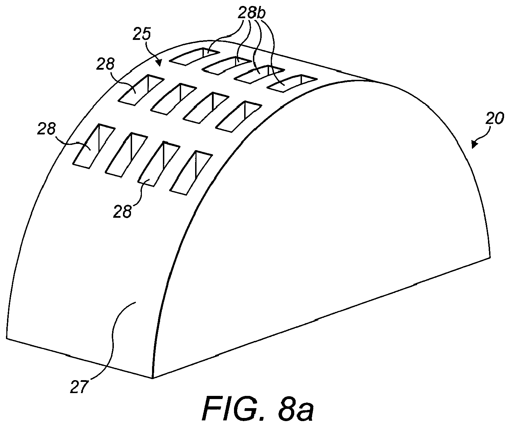

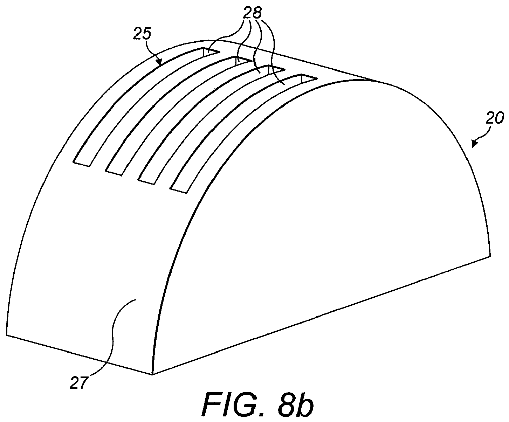

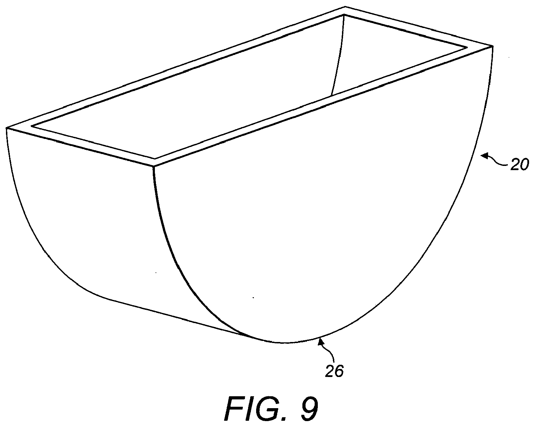

A second embodiment of the intermediate member 20, illustrated in Figures 8a, 8b and 9, has a base 25 which curves in two dimensions rather than the three dimensional curve of the dome-shaped intermediate member of the first embodiment. In this second embodiment, this is effectively semi-cylindrical though it might alternatively be semi-oval or differently curved. Figure 8a illustrates an arrangement having apertures 28b located near to the lowermost portion and apertures 28 in the at least one region raised relative to the lowermost point. Figure 8b illustrates an arrangement having apertures 28 which extend from towards the lowermost point to a region raised relative to the lowermost point. Such an arrangement of apertures is equally applicable as an alternative for the embodiments of Figures 6, 7 and 10 to 12.

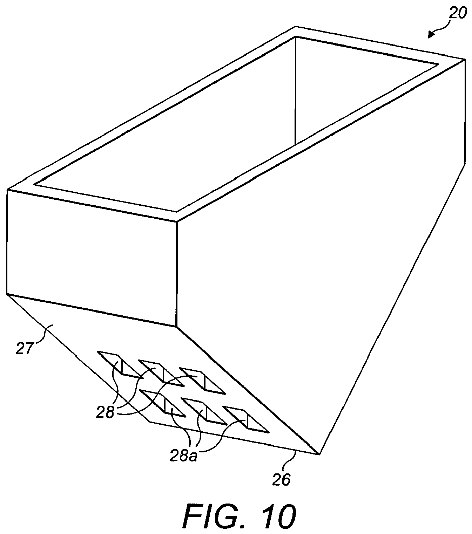

A third embodiment of the intermediate member 20 is illustrated in Figure 10. The base 25 of this intermediate member 20 has two straight faces meeting an apex which constitutes the lowermost point 26 of the base 25. Apertures 28a are located at or near the lowermost portion 26 (i.e. the point or apex). Further apertures 28 are located in the regions 27 away from the lowermost point.

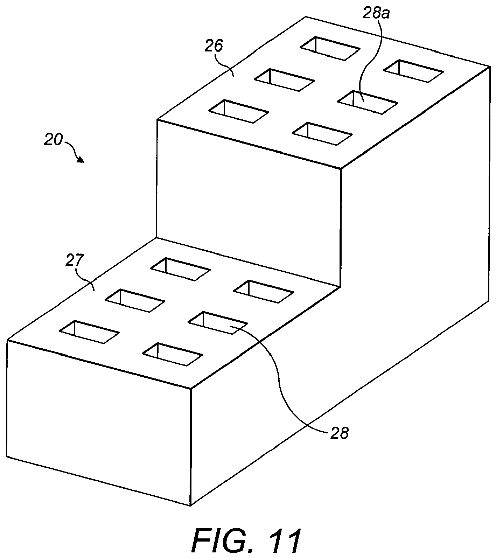

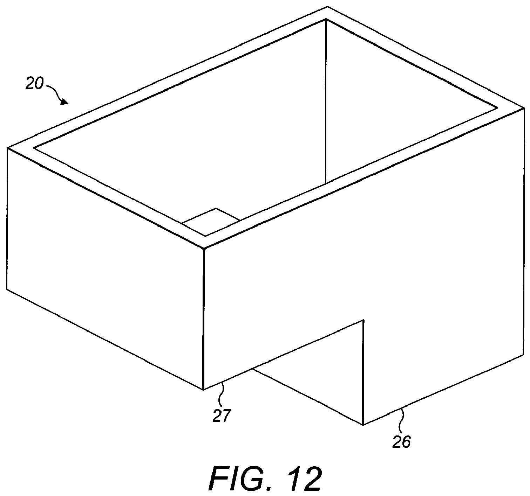

A fourth embodiment of the intermediate member 20 is illustrated in Figures 11 and 12. The base 25 of this intermediate member 20 has a stepped configuration. One of the stepped portions 26 constitutes the lowermost portion 26 while the other stepped portion 27 constitutes a region 27 raised relative to the lowermost point 26. Apertures 28a are located at the lowermost point 26 as well as in the raised region 27.

As the skilled person would understand, this aspect of the disclosure is not limited to the four example configurations of intermediate member 25. Different aspects of each of the example intermediate members may be combined, for example. There may, of course, be multiple raised regions, perhaps raised to different extents relative to the lowermost point. The region or regions may be flat, curved in two dimensions or curved in three dimensions. Furthermore, what is essential to the disclosure is that there is a lowermost point 26 (or possibly more than one lowermost point 26) and at least one region 27 raised relative to the lowermost point 26 with apertures located at or near the lowermost point 26 and apertures located in the at least one region 27 raised relative to the lowermost point.

The most preferred embodiment of the disclosure comprises an embodiment including both the tube 120 aspect and intermediate member 20 aspect of the disclosure. In particular, the most preferred embodiment comprises a tube 120 arrangement as hereinbefore described which feeds into an intermediate member 20 as hereinbefore described.

Embodiments of the disclosure may, however, include only one, two or more of the above aspects. For example one arrangement may have the tube 120, the intermediate member 20 and the valve 60; another arrangement may have only the valve 60 and the intermediate member 20.

Whether or not an embodiment comprises an intermediate member, the outlet of the tube 120 may be flared, it may have a step change in diameter, it may have a chamfered edge or it may have an edge which is lower at one side than another side. Any of these features may be used independently or in combination.

All aspects of the disclosure herein described are equally applicable to beverage preparation machines which are not of the kind having a cartridge.

## Claims

1. A beverage preparation machine comprising a beverage formation chamber comprising an inlet for receiving an aqueous medium and an outlet for discharging a beverage formed by contacting the aqueous medium with one or more beverage ingredients, the beverage preparation machine further comprising an intermediate member positioned downstream of the beverage formation chamber outlet to receive the beverage, the intermediate member being located between the beverage formation chamber outlet and a receptacle that, in use, ultimately receives the beverage prepared by the beverage preparation machine;
wherein the intermediate member defines a cavity which, in use, receives the beverage from the beverage formation chamber outlet, the cavity comprising a base comprising a lowermost point and at least one region raised relative to the lowermost point;
the base comprising a plurality of apertures either:
including one or more apertures located at or towards the lowermost point of the base and one or more apertures located in the at least one region raised relative to the lowermost point; or
including one or more apertures arranged to extend at or towards the lowermost point into the at least one region raised relative to the lowermost point.

2. The beverage preparation machine of claim 1 wherein the base is curved in more than one dimension and/or the base is bowl-shaped.

3. The beverage preparation machine of any of claims 1 to 2 wherein the base is a solid of revolution about a longitudinal axis of the intermediate member wherein the longitudinal axis passes through the lowermost point of the base and/or the base is concave and has a constant radius of curvature.

4. The beverage preparation machine
of claim 1 further comprising a tube forming at least a part of an outlet path for discharging the beverage to a receptacle;
wherein the tube has an upstream end for receiving the beverage and a downstream end for discharging the beverage;
wherein the upstream end has a characteristic internal dimension of at least 8 mm and the downstream end has a characteristic internal dimension of at least 10 mm;
wherein the downstream end of the tube feeds into the intermediate member.

5. A system comprising a beverage preparation machine as claimed in any preceding claim and one or more cartridges containing one or more beverage ingredients.

6. The system of claim 5 wherein the beverage preparation machine is configurable to dispense a first type of cartridge which comprises an entrainer for entraining air into the beverage wherein an air supply route to an air inlet of the entrainer is via the tube, and is also configurable to dispense a second type of cartridge which does not comprise an entrainer wherein foaming of the beverage is achieved using a variable geometry valve with consequent shearing and mixing of the beverage flowing through the valve.

7. A method of preparing a beverage comprising the steps of:
forming a beverage in a beverage formation chamber of a beverage preparation machine;
discharging the beverage from the beverage formation chamber into a cavity of an intermediate member, the cavity comprising a base comprising a lowermost point and at least one region raised relative to the lowermost point, the base comprising a plurality of apertures including one or more apertures located at or towards the lowermost point of the base and one or more apertures located in the at least one region raised relative to the lowermost point;
passing the beverage through one or more of the plurality of apertures; and
dispensing the beverage into a receptacle.

8. The method of claim 7 wherein with a relatively low volumetric flow of beverage into the cavity the beverage has a tendency to pass through only the one or more apertures located at or towards the lowermost point of the curved base, and with a relatively higher volumetric flow of beverage into the cavity the beverage has tendency to fill the cavity so as to pass through the one or more apertures located in the at least one region raised relative to the lowermost point as well as through the one or more apertures located at or towards the lowermost point of the curved base.

9. The method of claim 7 or claim 8 wherein on passing through the plurality of apertures, the beverage flows along an underside of the base to consolidate into a single stream of beverage which separates from the intermediate member at a point at or near the lowermost point of the base.

10. The method of any of claims 7 to 9 further comprising inserting a cartridge comprising one or more beverage ingredients into the beverage formation chamber.
